# EUROPÄISCHE PATENTSCHRIFT

(11) **EP 1 542 451 B1**
(45) Veröffentlichungstag und Bekanntmachung des Hinweises auf die Patenterteilung: **08.02.2012**
(21) Anmeldenummer: 03028210.7
(22) Anmeldetag: 09.12.2003
(51) Int. Cl.: H04N 1/60

(54) **Mobiltelefon mit Digitalkamera**
Mobile phone with digital camera
Téléphone mobile avec camera numérique

(43) Veröffentlichungstag der Anmeldung: 15.06.2005
(73) Patentinhaber: X-Rite Europe GmbH, 8105 Regensdorf (CH)
(72) Erfinder: Beyer, Martin, 59192 Bergkamen (DE); Hülskötter, Markus, 48282 Emsdetten (DE); Seegers, Björn, 48161 Münster (DE); Lamy, Francis, 8832 Wollerau (CH)
(74) Vertreter: Muschke, Markus Artur Heinz

(56) Entgegenhaltungen:
- EP-A- 0 905 966
- DE-C2- 19 751 465
- US-A1- 2001 013 894
- US-A1- 2002 180 751
- MACDONALD L W: "Developments in colour management systems" DISPLAYS, ELSEVIER SCIENCE PUBLISHERS BV., BARKING, GB, Bd. 16, Nr. 4, 1. Mai 1996 (1996-05-01), Seiten 203-211, XP004032522 ISSN: 0141-9382

## Beschreibung

Die Erfindung betrifft ein mit einer Digitalkamera ausgestattetes Mobiltelefon gemäss dem Oberbegriff des unabhängigen Anspruchs 1.

Mit einer Digitalkamera ausgestattete Mobiltelefone sind populär und immer weiter verbreitet. Mit solchen Mobiltelefonen können aufgenommene Bilder auf der eigenen Farbanzeigevorrichtung dargestellt sowie telefonisch übermittelt und beim Empfänger angezeigt werden.

Bei den heute zur Verfügung stehenden Mobiltelefonen ist die Farbwiedergabe noch verhältnismäßig schlecht. Konkret heißt dies, dass der visuelle Farbeindruck des von der Anzeigevorrichtung dargestellten Bilds oft nur unzureichend mit demjenigen des von der Digitalkamera aufgenommen Original-Bilds übereinstimmt.

Die EP 0 905 966 A beschreibt ein Bildverarbeitungsverfahren. Das Verfahren zur Verarbeitung von Bildern weist die Schritte des Durchführens des Empfangs von Daten durch Netzarbeit, die Eingabe von Bilddaten, die Übereinstimmung mit einem festgelegten Eingangsmodus erreichbar sind, das Handhaben der Speicherung von Daten, die in dem Empfangsschritt empfangen wurden und der Bilddaten, die in dem Eingangs- bzw. Eingabeschritt in den Speicher eingegeben wurden, und das Eingreifen zwischen den Operationen des Empfangsschritts und des Eingabeschritts auf, und zwar in Übereinstimmung mit der Speicherhandhabung in dem Steuerschritt. Mit dem so strukturierten Verfahren, wird das Kompressionsverhältnis des Eingangsbildes durch die Änderung des gegenwärtigen Fotografiermodus erhöht, falls der hinzugefügte Wert der geschätzten Empfangsdaten durch die Kommunikationsmittel und die Datenseite des fotografierten Bildes, das durch den gegenwärtigen Fotografiermodus vorbestimmt ist, den Rest des Speichers in dem Speicher überschreiten sollte, ist es somit möglich, die Kompatibilität von Unmittelbarkeit zwischen Bildeingabe und der Kommunikation zu ermöglichen, indem jeder plötzliche bzw. unerwartete Empfang während des Fotografierens gehandhabt bzw. gemanagt wird.

Die Publikation MacDonald L.W. "Developments in colour management systems" Diplays, Elsevier Science Publishers BV., Barking, GB, Bd. 16, Nr. 4, 1. Mai 1996 (1996-05-01), Seiten 201-211, XP004032522 ISSN: 0141-9382, beschreibt Farbmanagement-Systeme.

Die US 2002/0180751 A1 beschreibt eine Farbanzeigevorrichtung mit einem integrierten Farbanpassungsprozessor. Die Anzeigevorrichtung schließt einen integrierten Farbanpassungsprozessor ein, der die Farbdaten verarbeitet, um eine akkurate Farbwiedergabe auf der Anzeigevorrichtung einzurichten. Der integrierte Farbanpassungsprozessor kann intern zu der Anzeigevorrichtung oder extern zu der Anzeigevorrichtung sein. Der Prozessor kann Farbeingaben empfangen, die Farbeingabe verarbeiten und geänderte Farbbilddaten an die Anzeige ausgeben.

Die US 2001/0013894 A1 beschreibt eine Digitalkamera, die eine Bildverarbeitung für einen anschließbaren Drucker bereitstellt.

Die DE 197 51 465 C2 beschreibt eine Vorrichtung und ein Verfahren zum Bestimmen von Empfindlichkeitswerten für ein Kopieren eines mit einer digitale Kamera aufgenommenen Bildes, und eine Vorrichtung zum Kopieren eines Bildes auf Kopiermaterial.

Aufgabe der vorliegenden Erfindung ist es daher, die Farbwiedergabeeigenschaften eines gattungsgemäßen Mobiltelefons zu verbessern.

Diese der Erfindung zugrundeliegende Aufgabe wird durch das durch die Merkmale des unabhängigen Anspruchs 1 gekennzeichnete erfindungsgemäße Mobiltelefon gelöst.

Vorteilhafte Ausgestaltungen und Weiterbildungen des erfindungsgemäßen Verfahren sind Gegenstand der abhängigen Ansprüche.

Vorteilhaft ist das Mobiltelefon also mit einem Farbmanagementsystem ausgerüstet, welches aus einem Color Management Modul und einem oder mehreren Geräteprofilen besteht. Durch die Integration eines Farbmanagementsystems werden die Farbwiedergabeeigenschaften des Mobiltelefons wesentlich verbessert.

Color Management und Color Management Systeme sind an sich bekannt und werden in digitalen Farbreproduktionssprozessen allgemein eingesetzt. Eine umfassende und übersichtliche Darstellung der Hintergründe, Technologien und Anwendungen von Color Management Systemen findet sich in der von der Firma Logo GmbH, einer Gesellschaft der Gretag-Macbeth Gruppe, im August 1999 herausgegebenen Publikation "Postscriptum on Color Management, Philosophy and Technology of Color Management" der Autoren Stefan Brües, Liane May und Dietmar Fuchs. Eine weitere Abhandlung über Color Management findet sich beispielsweise im Kapitel 17 "Device-Independent Color Imaging" des Buchs "Color Appearance Models" von Mark D. Fairchild, erste Auflage, herausgegeben 1997 von Addison Wesley.

Eine zentrale Rolle im Color Management spielen Farbprofile oder allgemein Geräteprofile. Sie dienen zur eindeutigen Farbwerttransformation zwischen einem gerätespezifischen Farbraum und einem geräteunabhängigen Farbraum, wobei die Transformation selbst anhand der Profile durch ein Color Management Modul durchgeführt wird.

Farbprofile sind bezüglich ihres grundsätzlichen Aufbaus üblicherweise genormt. Eine bekannte und allgemein übliche Norm ist die nach ICC (International Color Consortium www.color.org, Spezifikation nach ICC www.color.org/icc_specs2.html ). Dieser Norm entsprechende Farbprofile werden daher häufig auch als ICC-Profile bezeichnet. Geräteprofile werden in Ausgabegeräteprofile und Eingabegeräteprofile unterteilt. Ausgabegeräteprofile werden im Zusammenhang mit durch Farbwertdaten angesteuerten Ausgabegeräten (Drucker, Bildschirme, Beamer etc.) verwendet, Eingabegeräteprofile entsprechend mit Farbwertdaten erzeugenden Eingabegeräten (Scanner, Digitalkameras etc.).

Die Erstellung (Berechnung) von Farbprofilen erfolgt üblicherweise unter Verwendung einer Farbtafel, die eine repräsentative Auswahl von unterschiedlichen Farbfeldem aufweisen, deren Farbwerte im zugrundegelegten geräteunabhängigen Farbraum (z.B. durch Messung mit einem geeichten und hochpräzisen Farbmessgerät) bekannt sind. Für ein Eingabefarbprofil wird die Farbtafel durch das betreffende Eingabegerät digitalisiert, d.h. es werden für jedes Farbfeld die zugehörigen Farbwerte im gerätespezifischen Farbraum des Eingabegeräts erzeugt. Aus diesen beiden Datensätzen - den Farbwerten der Farbfelder im geräteunabhängigen Farbraum und den Farbwerten der Farbfelder im gerätespezifischen Farbraum - wird dann mit mathematischen Methoden das Farbprofil für das Eingabegerät berechnet, wobei auch verschiedene standardisierte Reproduktionskriterien (Rendering Intents) berücksichtigt werden. Bei diesen Reproduktionskriterien wird zwischen den Moden "Perceptual" (gleicher Farbeindruck im Bild), "Relativ Colorimetric", "Absolute Colorimetric" und "Saturation" unterschieden, welche im Dokument ICC-1:1998-09 des ICC (International Color Consortium) definiert sind. Für die Berechnung des Farbprofils kann z.B. das Software-Paket "Profile Maker Pro" der vorstehend erwähnten Firma Logo GmbH, einer Gesellschaft der Gretag-Macbeth Gruppe, eingesetzt werden. Die Erstellung eines Ausgabegeräteprofils erfolgt analog, wobei aber die für den Vergleich herangezogenen Farbmessdaten aus dem vom Ausgabegerät erzeugten Bild ermittelt werden.

Im Folgenden wird die Erfindung anhand der Zeichnung näher erläutert. Es zeigen:
- Fig. 1: eine Aussenansicht eines Ausführungsbeispiels eines erfindungsgemäßen Mobiltelefons,
- Fig. 2: ein prinzipielles Funktionsschema des Mobiltelefons der Fig. 1 und
- Fig. 3: ein Blockschema der erfindungsrelevanten Details des Mobiltelefons.

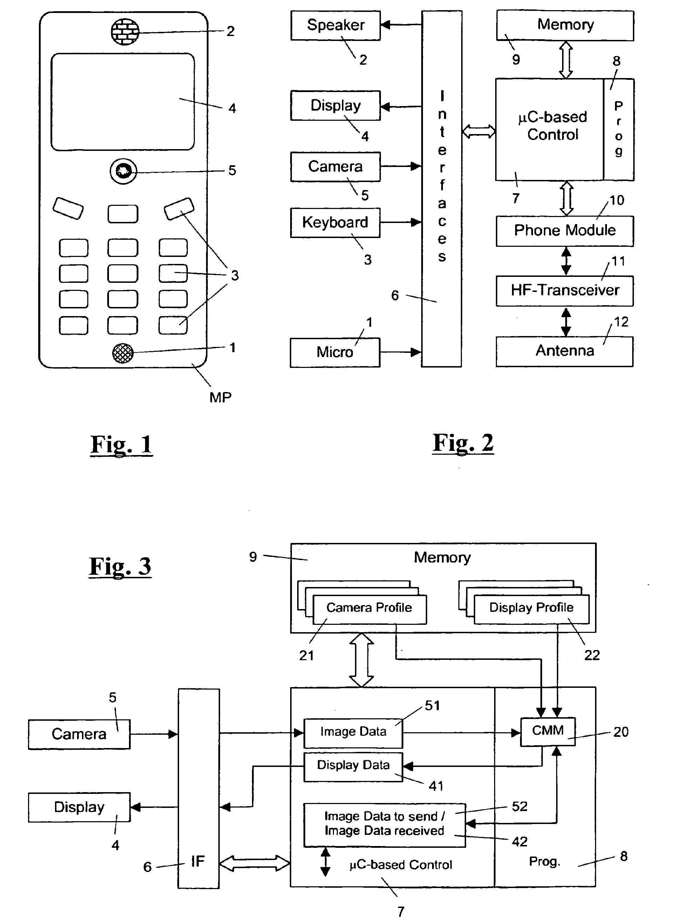

Das in Fig. 1 dargestellte Mobiltelefon MP umfasst als Komponenten ein Mikrofon 1, einen Lautsprecher 2, eine Bedienungstastatur 3, eine grafikfähige farbtaugliche Anzeigevorrichtung 4 und eine Digitalkamera 5, die auch zur Aufnahme von Video-Sequenzen ausgebildet sein kann. Die Anzeigevorrichtung 4 ist üblicherweise als TFT-Display ausgebildet.

Die genannten Komponenten sind gemäß Fig. 2 über entsprechende Schnittstellen 6 mit einer rechnerbasierten Steuerelektronik 7 verbunden, die von einem Programm 8 gesteuert wird. Die Steuerelektronik 7 ist ferner mit einem Speicher 9 verbunden und arbeitet mit einem Telefon-Modul 10 zusammen. Letzteres ist mit einem HF-Sende/- Empfangsmodul 11 verbunden, welches schliesslich HF-Signale an eine Antenne 12 abgibt bzw. von dieser empfängt. Alle über die Signalübertragung hinausgehenden Funktionen des Mobiltelefons MP sind durch das Programm 8 implementiert.

Soweit entspricht das erfindungsgemäße Mobiltelefon MP sowohl hinsichtlich Aufbau als auch hinsichtlich Funktionen voll und ganz bekannten Geräten dieser Art, so dass der Fachmann diesbezüglich keiner näheren Erläuterung bedarf.

Die Unterschiede des erfindungsgemäßen Mobiltelefons MP gegenüber herkömmlichen Geräten dieser Art sind aus der Detaildarstellung der Fig. 3 ersichtlich. Gemäß dem wesentlichsten Aspekt der Erfindung enthält das Programm 8 ein an sich bekanntes Color Management Modul 20, welches anhand von ICC-Profilen eine Farbraumtransformation ihm zugeführter Bilddaten durchführen kann. Die erforderlichen ICC-Profile sind im Speicher 9 in Form mindestens eines Kamera-Geräteprofils 21 und mindestens eines Display-Geräteprofils 22 abgelegt.

Die von der Digitalkamera 5 erzeugten digitalen Kamera-Bilddaten 51 werden vom Color Management Modul 20 anhand des Kamera-Geräteprofils (Eingabegeräteprofils) 21 und des Display-Geräteprofils (Ausgabegeräteprofils) 22 transfonniert und dabei in entsprechende digitale Display-Bilddaten 41 umgerechnet, welche dann von der Anzeigevorrichtung 4 dargestellt werden. Durch diese Transformation bzw. Umrechnung der Bilddaten wird die Farbtreue der Bildwiedergabe wesentlich verbessert, d.h. das von der Anzeigevorrichtung dargestellte Bildmotiv stimmt farblich wesentlich besser mit dem von der Digitalkamera aufgenommenen Original-Bildmotiv überein als bei herkömmlichen Mobiltelefonen ohne Color Management System.

Wie in der Fig. 3 angedeutet, können auch mehrere Kamera-Geräteprofile 21 und mehrere Display-Geräteprofile 22 im Speicher 9 abgelegt sein. Die einzelnen Kamera-Geräteprofile 21 können dabei z.B. für verschiedene Aufnahme-Beleuchtungssituationen (Tageslicht, Kunstlicht etc.) optimiert sein, wobei die Auswahl des jeweils optimalen Kamera-Geräteprofils automatisch durch das Programm 8 durch Analyse der Kamera-Bilddaten 51 erfolgen kann. Die einzelnen Display-Geräteprofile 22 können z.B. für verschiedene Helligkeitseinstellungen der Anzeigevorrichtung 4 optimiert sein, wobei die sich Auswahl des jeweils optimalen Display-Geräteprofils aus der gewählten Helligkeitseinstellung ergibt.

Die Erstellung der Geräteprofile 21 und 22 erfolgt nach den einleitend beschriebenen Methoden durch den Hersteller des Mobiltelefons MP oder der Anzeigevorrichtung 4 bzw. der Digitalkamera 5.

Für geringere Ansprüche kann auf die Display-Geräteprofile 22 auch verzichtet werden. In diesem Fall würde nur das Farbübertragungsverhalten der Digitalkamera 5 korrigiert.

Für die telefonische Übermittlung des von der Digitalkamera 5 aufgenommenen Bilds werden die Kamera-Bilddaten 51 ebenfalls nur aufgrund des Kamera-Geräteprofils 21 korrigiert und in Form von korrigierten Sendebilddaten 42 zur Verfügung gestellt. Umgekehrt werden empfangene Bilddaten 43 entweder direkt zur Anzeige gebracht oder nur aufgrund des Display-Geräteprofils 22 in Anzeige-Bilddaten 41 transformiert und dann von der Anzeigevorrichtung 4 bildlich dargestellt.

## Patentansprüche

1. Mobiltelefon (MP) mit einem Mikrofon (1), einem Lautsprecher (2), einer Bedienungstastatur (3), einer Farbanzeigevorrichtung (4), einer Digitalkamera (5), einem Sende/-Empfangsmodul (11) und einer Antenne (12) sowie mit einer rechnerbasierten Steuerung (7) und einem zugehörigen Steuerungsprogramm (8),
wobei
das Mobiltelefon (MP) ein ein Color Management Modul (20), ein Kamera-Geräteprofil (21) und ein Display-Geräteprofil (22) umfassendes Farbmanagementsystem zur farblichen Korrektur der von der Digitalkamera (5) erzeugten Bilddaten (51) enthält;
das Color Management Modul konfiguriert ist mit den ihm zugeführten Bilddaten (51) anhand des Kamera-Geräteprofils (21) und des Display-Geräteprofils (22) eine Farbraumtransformation durchzuführen, **dadurch gekennzeichnet, dass**
das Mobiltelefon (MP) zwei oder mehrere auswählbare optimierte Kamera-Geräteprofile (21) und zwei oder mehrere auswählbare optimierte Display-Geräteprofile (22) enthält;
die auswählbaren Kamera-Geräteprofile (21) für verschiedene Aufnahme-Beleuchtungssituationen und die auswählbaren Display-Geräteprofile (22) für verschiedene Helligkeitseinstellungen der Farbanzeigevorrichtung (4) optimiert sind;
das Farbmanagementsystem ein ausgewähltes optimiertes Kamera-Geräteprofil (21) als das Kamera-Geräteprofil (21) und ein ausgewähltes optimiertes Display-Geräteprofil (22) als das Display-Geräteprofil (22) verwendet;
die Auswahl des optimierten Display-Geräteprofils (22) automatisch erfolgt; und dass
die Auswahl des optimierten Kamera-Geräteprofils (21) automatisch durch Analyse der Kamera-Bilddaten (51) erfolgt.

2. Mobiltelefon nach Anspruch 1, wobei das Color Management Modul (20) die von der Digitalkamera (5) erzeugten Bilddaten (51) vor der telefonischen Übertragung anhand des Kamera-Geräteprofils (21) in zu sendende Bilddaten (52) transformiert.

3. Mobiltelefon nach Anspruch 1 oder 2, wobei das Color Management Modul (20) telefonisch empfangene Bilddaten (42) vor der Darstellung auf der Anzeigevorrichtung (4) anhand des Display-Geräteprofils (22) in darzustellende Bilddaten (41) transformiert.

4. Mobiltelefon (MP) nach einem der vorherigen Ansprüche, wobei das Mobiltelefon (MP) einen Speicher (9) aufweist, in dem die optimierten Kamera-Geräteprofile (21) und optimierten Display-Geräteprofile (22) gespeichert sind.

5. Mobiltelefon (MP) nach einem der vorherigen Ansprüche, wobei die wählbaren Kamera-Geräteprofile (21) für die Aufnahme-Beleuchtungssituation von Tageslicht und Kunstlicht optimiert sind.

6. Mobiltelefon (MP) nach einem der vorherigen Ansprüche, wobei das optimale Display-Geräteprofil (22) anhand der gewählten Helligkeitseinstellung der Farbanzeigevorrichtung (4) bestimmt wird.

7. Mobiltelefon (MP) nach einem der vorherigen Ansprüche, wobei das Steuerprogramm (8) eine Analyse der Kamera-Bilddaten (51) durchführt.

## Claims

1. A mobile telephone (MP) with a microphone (1), a loudspeaker (2), an operating keypad (3), a colour display apparatus (4), a digital camera (5), a transmission / receiving module (11) and an aerial (12) as well as with a computer-based control means (7) and an associated control program (8),
wherein
the mobile telephone (MP) contains a colour management system comprising a colour management module (20), a camera apparatus profile (21) and a display apparatus profile (22) for the colour correction of the image data (51) produced by the digital camera (5);
the colour management module is configured with the image data (51) supplied to it with reference to the camera apparatus profile (21) and the display apparatus profile (22) to perform a colour space transformation, **characterized in that** the mobile telephone (MP) comprises two or more optimized camera apparatus profiles (21) capable of being selected and two or more optimized display apparatus profiles (22) capable of being selected; the camera apparatus profiles (21) capable of being selected are optimized for different recording illumination situations and the display apparatus profiles (22) capable of being selected are optimized for different brightness adjustments of the colour display apparatus (4);
the colour management system uses an optimized camera apparatus profile (21) capable of being selected as the camera apparatus profile (21) and an optimized display apparatus profile (22) capable of being selected as the display apparatus profile (22);
the selection of the optimized display apparatus profile (22) takes place automatically, and the selection of the optimized camera apparatus profile (21) takes place automatically by analysis of the camera image data (51).

2. A mobile telephone according to claim 1, wherein the colour management module (20) transforms the image data (51) produced by the digital camera (5) into image data (52) to be transmitted before the telephone transfer with reference to the camera apparatus profile (21).

3. A mobile telephone according to claim 1 or 2, wherein the colour management module (20) transforms the image data (51) received by telephone into image data (41) to be displayed before the display on the display device (4) with reference to the display apparatus profile (22).

4. A mobile telephone (MP) according to any one of the preceding claims, wherein the mobile telephone (MP) has a memory (9) in which the optimized camera apparatus profiles (21) and the optimized display apparatus profiles (22) are stored.

5. A mobile telephone (MP) according to any one of the preceding claims, wherein the camera apparatus profiles (21) capable of being selected are optimized for the recording illumination situation of daylight and artificial light.

6. A mobile telephone (MP) according to any one of the preceding claims, wherein the optimum display apparatus profile (22) is determined with reference to the selected brightness adjustment of the colour display apparatus (4).

7. A mobile telephone (MP) according to any one of the preceding claims, wherein the control program (8) performs an analysis of the camera image data (51).

## Revendications

1. Téléphone mobile (MP) équipé d'un microphone (1), d'un haut-parleur (2), d'un clavier de commande (3), d'un dispositif d'affichage en couleur (4), d'une caméra numérique (5), d'un module d'émission-réception (11) et d'une antenne (12) ainsi que d'une commande basée sur un calculateur (7) et d'un programme de commande associé (8),
le téléphone mobile (MP) contenant un système de gestion de couleurs, qui comprend un module de gestion de couleurs (20), un profil d'appareil de caméra (21) et un profil d'appareil d'affichage (22), pour corriger les couleurs des données d'image (51) générées par la caméra numérique (5) ;
le module de gestion de couleurs étant configuré pour effectuer à l'aide du profil d'appareil de caméra (21) et du profil d'appareil d'affichage (22) une transformation de l'espace de couleurs avec les données d'image (51) qu'il a reçues,
**caractérisé en ce que**
le téléphone mobile (MP) contient au moins deux profils d'appareil de caméra (21) optimisés et sélectionnables et au moins deux profils d'appareil d'affichage (22) optimisés et sélectionnables ;
les profils d'appareil de caméra (21) sélectionnables sont optimisés pour différentes situations d'éclairage de prise de vue et les profils d'appareil d'affichage (22) sélectionnables sont optimisés pour différents réglages de luminosité du dispositif d'affichage en couleur (4) ;
le système de gestion de couleurs emploie un profil d'appareil de caméra (21) optimisé et sélectionnable en tant que profil d'appareil de caméra (21) et un profil d'appareil d'affichage (22) optimisé et sélectionnable en tant que profil d'appareil d'affichage (22) ;
la sélection du profil d'appareil d'affichage (22) optimisé est effectuée automatiquement ;
et **en ce que**
la sélection du profil d'appareil de caméra (21) optimisé est effectuée automatiquement par une analyse des données d'image (51) de la caméra.

2. Téléphone mobile selon la revendication 1, dans lequel, avant la transmission téléphonique, le module de gestion de couleurs (20) transforme, à l'aide du profil d'appareil de caméra (21), les données d'image (51) générées par la caméra numérique (5) en des données d'image à émettre (52).

3. Téléphone mobile selon la revendication 1 ou 2, dans lequel, avant la représentation sur le dispositif d'affichage (4), le module de gestion de couleurs (20) transforme, à l'aide du profil d'appareil d'affichage (22), des données d'image reçues téléphoniquement (42) en des données d'image à représenter (41).

4. Téléphone mobile (MP) selon l'une quelconque des revendications précédentes, dans lequel le téléphone mobile (MP) comporte une mémoire (9) dans laquelle sont enregistrés les profils d'appareil de caméra (21) optimisés et les profils d'appareil d'affichage (22) optimisés.

5. Téléphone mobile (MP) selon l'une quelconque des revendications précédentes, dans lequel les profils d'appareil de caméra (21) sélectionnables sont optimisés pour la situation d'éclairage de prise de vue correspondant à une lumière naturelle ou à une lumière artificielle.

6. Téléphone mobile (MP) selon l'une quelconque des revendications précédentes, dans lequel le profil d'appareil d'affichage (22) optimale est déterminé à l'aide du réglage de luminosité choisi pour le dispositif d'affichage en couleur (4).

7. Téléphone mobile (MP) selon l'une quelconque des revendications précédentes, dans lequel le programme de commande (8) effectue une analyse des données d'image (51) de la caméra.
